# EUROPEAN PATENT APPLICATION

(11) **EP 4 852 069 A1**
(43) Date of publication of application: **09.12.2026**
(21) Application number: 24921931.2
(22) Date of filing: 24.12.2024
(51) Int. Cl.: H01M 4/13, H01M 4/134, H01M 4/36, H01M 4/62, H01M 10/052

(54) **NON-AQUEOUS ELECTROLYTE SECONDARY BATTERY**

(30) Priority: 31.01.2024 JP 2024012527
(71) Applicant: Panasonic Intellectual Property Management Co., Ltd., Kadoma-shi, Osaka 571-0057 (JP)
(72) Inventor: TAKIJIRI Manabu, Osaka 571-0057 (JP); HARADA Tomohiro, Osaka 571-0057 (JP); OKAZAKI Tomohisa, Osaka 571-0057 (JP)
(74) Representative: Eisenführ Speiser
(86) International application number: PCT/JP2024/045781
(87) International publication number: WO 2025/164178

(57) **Abstract**

This non-aqueous electrolyte secondary battery (10) comprises a positive electrode (11), a negative electrode (12), and a non-aqueous electrolyte, wherein the negative electrode (12) has a negative electrode mixture layer containing a negative electrode active material including a Si-based material, the positive electrode (11) has a positive electrode mixture layer containing a positive electrode active material and a conductive agent, the positive electrode active material includes a positive electrode active material A composed of polycrystalline particles and a positive electrode active material B composed of single-crystalline particles, the average particle diameter (D_{B}) of the positive electrode active material B is smaller than the average particle diameter (D_{A}) of the positive electrode active material A, and the conductive agent contains single-walled carbon nanotubes and multi-walled carbon nanotubes.

## Description

### TECHNICAL FIELD

The present disclosure relates to a technique of a non-aqueous electrolyte secondary battery.

### BACKGROUND

A non-aqueous electrolyte secondary battery such as a lithium-ion secondary battery includes, for example, a positive electrode in which a positive electrode mixture layer is disposed on a positive electrode core, a negative electrode in which a negative electrode mixture layer is disposed on a negative electrode core, and a non-aqueous electrolyte.

For example, Patent Literature 1 discloses the use of, as conductive agents contained in a positive electrode mixture layer, a first elongated carbon material having a first length and a second elongated carbon material having a second length greater than the first length, in order to improve battery characteristics compared to conventional techniques.

### CITATION LIST

### PATENT LITERATURE

Patent Literature 1: WO 2020/105729 A

### SUMMARY

However, in the conventional technique, there is room for improvement in resistance increase associated with charge/discharge cycles of a secondary battery and in rapid charging characteristics.

Therefore, an object of the present disclosure is to provide a non-aqueous electrolyte secondary battery that suppresses resistance increase associated with charge/discharge cycles and has excellent rapid charging characteristics.

A non-aqueous electrolyte secondary battery according to an aspect of the present disclosure includes a positive electrode, a negative electrode, and a non-aqueous electrolyte, in which the negative electrode has a negative electrode mixture layer containing a negative electrode active material including a Si-based material, the positive electrode has a positive electrode mixture layer containing a positive electrode active material and a conductive agent, the positive electrode active material includes a positive electrode active material A of polycrystalline particles and a positive electrode active material B of single-crystalline particles, an average particle diameter (D_{B}) of the positive electrode active material B is smaller than an average particle diameter (D_{A}) of the positive electrode active material A, and the conductive agent contains a single-walled carbon nanotube and a multi-walled carbon nanotube.

According to an aspect of the present disclosure, it is possible to provide a non-aqueous electrolyte secondary battery that suppresses resistance increase associated with charge/discharge cycles and has excellent rapid charging characteristics.

### BRIEF DESCRIPTION OF DRAWINGS

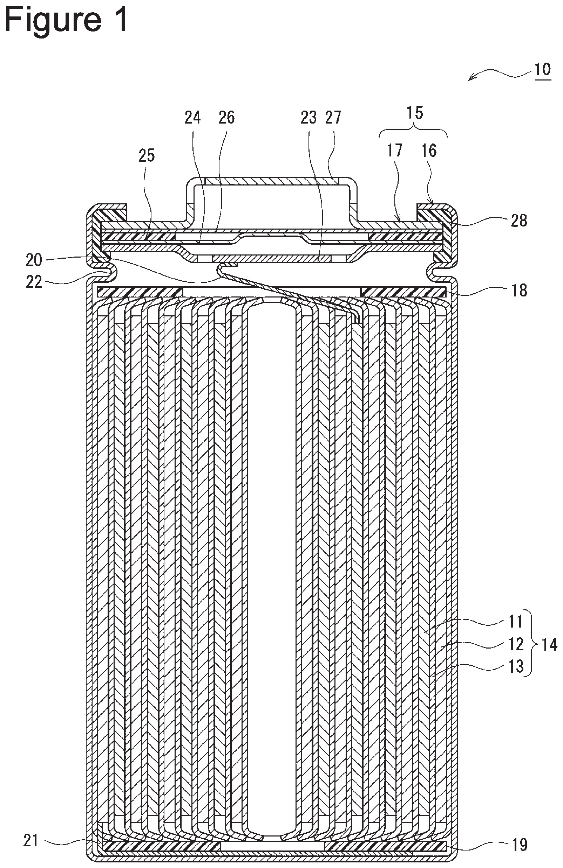

FIG. 1 is a cross-sectional view of a non-aqueous electrolyte secondary battery as an example of an embodiment.

### DESCRIPTION OF EMBODIMENTS

A non-aqueous electrolyte secondary battery according to an aspect of the present disclosure includes a positive electrode, a negative electrode, and a non-aqueous electrolyte, in which the negative electrode has a negative electrode mixture layer containing a negative electrode active material including a Si-based material, the positive electrode has a positive electrode mixture layer containing a positive electrode active material and a conductive agent, the positive electrode active material includes a positive electrode active material A of polycrystalline particles and a positive electrode active material B of single-crystalline particles, an average particle diameter (D_{B}) of the positive electrode active material B is smaller than an average particle diameter (D_{A}) of the positive electrode active material A, and the conductive agent contains a single-walled carbon nanotube and a multi-walled carbon nanotube. The non-aqueous electrolyte secondary battery according to an aspect of the present disclosure exhibits the effect of suppressing resistance increase associated with charge/discharge cycles and having excellent rapid charging characteristics. The reason why the above effect is exhibited is not sufficiently clear, but the following is presumed.

According to the present disclosure, since a Si-based material is contained in the negative electrode mixture layer, an increase in battery capacity is achieved. In addition, since the positive electrode mixture layer contains positive electrode active materials A and B having different average particle diameters, the packability of the positive electrode active material is enhanced, and from this point as well, an increase in battery capacity is achieved. Generally, when positive electrode active materials having different average particle diameters are used, reaction non-uniformity tends to occur within the positive electrode mixture layer, and the positive electrode active material having a smaller average particle diameter tends to deteriorate easily. For this reason, the use of single-crystalline particles having excellent durability is considered for the positive electrode active material having a smaller average particle diameter. However, since single-crystalline particles have poor electron conductivity, simply replacing the material tends to lead to a decrease in rapid charging performance. However, in the present disclosure, since a single-walled carbon nanotube and a multi-walled carbon nanotube are used as the conductive agent contained in the positive electrode mixture layer, it becomes possible to reduce the resistance of the positive electrode mixture layer containing single-crystalline particles. Specifically, a multi-walled carbon nanotube having a generally shorter fiber length is arranged between positive electrode active material particles, and a single-walled carbon nanotube having a generally longer fiber length than the multi-walled carbon nanotube is arranged so as to straddle a plurality of positive electrode active material particles, whereby a continuous electron conduction path is constructed in the entire positive electrode mixture layer, thereby making it possible to reduce the resistance of the positive electrode mixture layer containing single-crystalline particles. As a result, it is inferred that excellent rapid charging characteristics can be exhibited. The use of a single-walled carbon nanotube and a multi-walled carbon nanotube makes it possible to reduce the resistance of the positive electrode mixture layer with a small amount of a conductive agent, and therefore it is also possible to maintain a certain amount of voids in the positive electrode mixture layer. This makes it possible, for example, to retain, in the positive electrode mixture layer, the electrolyte solution discharged due to swelling of the negative electrode mixture layer during charging. That is, since depletion of the electrolyte solution within the electrode can be suppressed, it is considered that this leads to suppression of resistance increase associated with charge/discharge cycles and improvement of rapid charging characteristics.

Hereinafter, an example of an embodiment of a non-aqueous electrolyte secondary battery according to the present disclosure will be described. The drawings referred to in the following embodiments are schematically illustrated, and dimensional ratios and the like of components drawn in the drawings may be different from real ones.

FIG. 1 is a cross-sectional view of a non-aqueous electrolyte secondary battery as an example of an embodiment. A non-aqueous electrolyte secondary battery 10 illustrated in FIG. 1 includes a wound-type electrode assembly 14 formed by winding a positive electrode 11 and a negative electrode 12 with a separator 13 interposed therebetween, a non-aqueous electrolyte, insulating plates 18 and 19 disposed above and below the electrode assembly 14, respectively, and a battery case 15 housing the above-described members therein. The battery case 15 includes a bottomed cylindrical case body 16 and a sealing assembly 17 that closes an opening of the case body 16. Instead of the wound-type electrode assembly 14, another type of electrode assembly, such as a laminated-type electrode assembly in which positive electrodes and negative electrodes are alternately laminated with separators interposed therebetween, may be applied. Examples of the battery case 15 include a metal case having a cylindrical shape, a square shape, a coin shape, or a button shape or the like, and a resin case (so-called pouch type) formed by laminating a resin sheet.

The non-aqueous electrolyte has, for example, ion conductivity (for example, lithium ion conductivity). The non-aqueous electrolyte may be a liquid electrolyte (electrolyte solution) or a solid electrolyte.

The liquid electrolyte (electrolyte solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate or the like) in which at least a part of hydrogen in these solvents is substituted with a halogen atom such as fluorine. As the electrolyte salt, for example, a lithium salt such as LiPF₆ is used.

As the solid electrolyte, for example, a solid or gel polymer electrolyte, an inorganic solid electrolyte, or the like can be used. For example, the polymer electrolyte contains a lithium salt and a matrix polymer or contains a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. As the inorganic solid electrolyte, for example, a material known for all-solid-state lithium-ion secondary batteries and the like (for example, an oxide-based solid electrolyte, a sulfide-based solid electrolyte, a halogen-based solid electrolyte, or the like) can be used.

The case body 16 is, for example, a bottomed cylindrical metal container. A gasket 28 is provided between the case body 16 and the sealing assembly 17 to keep the interior of the battery airtight. The case body 16 has a projecting portion 22 that has, for example, a side surface partially projecting inward and supports the sealing assembly 17. The projecting portion 22 is preferably formed in an annular shape along the circumferential direction of the case body 16, and supports the sealing assembly 17 on its top surface.

The sealing assembly 17 has a structure in which a filter 23, a lower vent member 24, an insulating member 25, an upper vent member 26, and a cap 27 are sequentially stacked from the electrode assembly 14 side. Each of the members constituting the sealing assembly 17 has, for example, a disk shape or a ring shape. The members other than the insulating member 25 are electrically connected to each other. The lower vent member 24 and the upper vent member 26 are connected to each other at respective central portions, and the insulating member 25 is interposed between peripheral portions of the respective vent members. When an internal pressure of the non-aqueous electrolyte secondary battery 10 increases due to heat generation caused by an internal short circuit or the like, for example, the lower vent member 24 is deformed to push up the upper vent member 26 toward the cap 27 side and is broken, and a current path between the lower vent member 24 and the upper vent member 26 is interrupted. When the internal pressure further increases, the upper vent member 26 is broken, and gas is discharged from the opening of the cap 27.

In the non-aqueous electrolyte secondary battery 10 illustrated in FIG. 1, a positive electrode lead 20 attached to the positive electrode 11 extends toward the sealing assembly 17 side through a through hole of the insulating plate 18, and a negative electrode lead 21 attached to the negative electrode 12 extends toward the bottom side of the case body 16 through the outside of the insulating plate 19. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, and the separator 13 constituting the non-aqueous electrolyte secondary battery 10 will be further described.

For example, the positive electrode 11 includes a positive electrode core and a positive electrode mixture layer disposed on the positive electrode core. The positive electrode mixture layer may be disposed only on one side surface of the positive electrode core or may be disposed on both side surfaces of the positive electrode core.

Examples of the positive electrode core constituting the positive electrode 11 include a foil of a metal, such as aluminum or an aluminum alloy, which is stable in a potential range of the positive electrode 11, and a film in which the metal is disposed on its surface layer. The thickness of the positive electrode core is, for example, greater than or equal to 10 µm and less than or equal to 50 µm. The positive electrode mixture layer contains a positive electrode active material and a conductive agent. The positive electrode mixture layer may contain a binder or the like.

The positive electrode active material contains a positive electrode active material A of polycrystalline particles and a positive electrode active material B of single-crystalline particles. The term "single-crystalline particles" refers to not only particles in a state where the particles are completely separated into individual primary particles, but also particles in which several to more than ten (specifically, 2 to 19) primary particles are aggregated. The term "polycrystalline particles" refers to particles (secondary particles) in which several tens or more (specifically, 20 or more) primary particles are aggregated.

The average particle diameter (D_{B}) of the positive electrode active material B of single-crystalline particles need only be smaller than (D_{A}) of the positive electrode active material A of polycrystalline particles. However, for example, from the viewpoint of further enhancing the packability of the positive electrode active material, or being able to further improve the rapid charging characteristics and the resistance increase associated with charge/discharge cycles, D_{A}/D_{B} is preferably greater than or equal to 2 and less than or equal to 6, more preferably greater than or equal to 3 and less than or equal to 5, and even more preferably greater than or equal to 3 and less than or equal to 4. The average particle diameter of the positive electrode active material B of single-crystalline particles may be, for example, in a range greater than or equal to 2 µm and less than or equal to 20 µm, and the average particle diameter of the positive electrode active material A of the polycrystalline particles may be, for example, in a range greater than or equal to 5 µm and less than or equal to 25 µm. The average particle diameter in the present disclosure is a volume average particle diameter measured by a laser diffraction method, and is a median diameter at which a volume integrated value is 50% in a particle diameter distribution. The average particle diameter can be measured by a laser diffraction method using, for example, MT3000II manufactured by MicrotracBEL Corp.

Examples of the positive electrode active materials A and B include a lithium-containing metal composite oxide. The lithium-containing metal composite oxide may contain, for example, Ni, Co, Mn, Al, Zr, B, Mg, Sc, Y, Ti, Fe, Cu, Zn, Cr, Pb, Sn, Na, K, Ba, Sr, Ca, W, Mo, Nb, Si, or the like. Among these, for example, from the viewpoint of increasing the battery capacity, it is preferable to contain Ni in an amount greater than or equal to 85 mol% with respect to the total molar amount of metal elements excluding lithium, and from the viewpoint of further suppressing deterioration of charge/discharge cycle characteristics, or the like, it is preferable to contain at least one of Al and Mn. The lithium-containing metal composite oxide of the positive electrode active material A and the lithium-containing metal composite oxide of the positive electrode active material B may have the same composition or different compositions.

The ratio ((M_{B}/(M_{A}+M_{B}))×100) of the mass (M_{B}) of the positive electrode active material B to the total mass (M_{A}+M_{B}) of the positive electrode active material A and the positive electrode active material B is preferably greater than or equal to 10 mass% and less than or equal to 40 mass%, more preferably greater than or equal to 20 mass% and less than or equal to 40 mass%, and still more preferably greater than or equal to 20 mass% and less than or equal to 30 mass%, for example, from the viewpoint of being able to further improve the rapid charging characteristics and the resistance increase associated with charge/discharge cycles, and the like. The total mass of the positive electrode active material A and the positive electrode active material B is preferably greater than or equal to 90 mass%, and more preferably greater than or equal to 95 mass% with respect to the total mass of the positive electrode mixture layer.

The conductive agent contains a single-walled carbon nanotube and a multi-walled carbon nanotube. The single-walled carbon nanotube (SWCNT) is a carbon nanostructure in which one layer of graphene sheet constitutes one cylindrical shape, and a multi-walled carbon nanotube (MWCNT) is a carbon nanostructure in which two or more layers of graphene sheets are concentrically stacked to constitute one cylindrical shape. The graphene sheet refers to a layer in which a carbon atom in an sp2 hybrid orbital forming a crystal of graphite is located at an apex of a regular hexagon. The shape of the carbon nanotube is not limited. Examples of the shape include various forms including needle shapes, cylindrical tube shapes, fishbone shapes (fishbone or cup-stacked type), trump shapes (platelets), and coil shapes.

The fiber lengths of the single-walled carbon nanotube and the multi-walled carbon nanotube may be, for example, greater than or equal to 500 µm and less than or equal to 2000 µm, and greater than or equal to 0.1 µm and less than or equal to 50 µm, respectively. The fiber length of the carbon nanotube can be determined by measuring the lengths of 50 arbitrary carbon nanotubes with a field-emission scanning electron microscope (FE-SEM) and arithmetically averaging the lengths. The fiber length (L_{M}) of the multi-walled carbon nanotube is preferably shorter than the fiber length (L_{S}) of the single-walled carbon nanotube, and L_{M}/L_{S} is more preferably greater than or equal to 0.00005 and less than or equal to 0.1 from the viewpoint that a continuous electron conduction path can be easily constructed in the entire positive electrode mixture layer and the resistance of the positive electrode mixture layer can be further reduced.

The outermost peripheral diameters (that is, fiber diameters) of the single-walled carbon nanotube and the multi-walled carbon nanotube may be, for example, greater than or equal to 0.5 nm and less than or equal to 20 nm, and greater than or equal to 1 nm and less than or equal to 10 nm. The outermost peripheral diameter of the carbon nanotube can be determined by measuring the outer diameters of 50 arbitrary carbon nanotubes with a field-emission scanning electron microscope (FE-SEM) or a transmission electron microscope (TEM) and arithmetically averaging the outer diameters.

The multi-walled carbon nanotube preferably includes a multi-walled carbon nanotube having a BET specific surface area greater than or equal to 200 m²/g from the viewpoint of being able to further improve the rapid charging characteristics and the resistance increase associated with charge/discharge cycles. Further, the single-walled carbon nanotube preferably includes a single-walled carbon nanotube having a BET specific surface area greater than or equal to 300 m²/g from the viewpoint of being able to further improve the rapid charging characteristics and the resistance increase associated with charge/discharge cycles. The upper limit of the BET specific surface area of the multi-walled carbon nanotube may be, for example, less than or equal to 500 m²/g. The upper limit of the BET specific surface area of the single-walled carbon nanotube may be, for example, less than or equal to 600 m²/g. The specific surface area of a carbon nanotube is determined by the BET method, which is a general method for measuring a specific surface area, using a specific surface area measuring apparatus by a gas adsorption method.

The content of the multi-walled carbon nanotube is preferably greater than or equal to 0.01 parts by mass and less than or equal to 0.5 parts by mass, more preferably greater than or equal to 0.1 parts by mass and less than or equal to 0.5 parts by mass, and still more preferably greater than or equal to 0.2 parts by mass and less than or equal to 0.5 parts by mass with respect to 100 parts by mass of the positive electrode active material, for example, from the viewpoint of being able to further improve the rapid charging characteristics and the resistance increase associated with charge/discharge cycles. Further, the content of the single-walled carbon nanotube contained in the positive electrode mixture layer 32 is preferably greater than or equal to 0.0001 parts by mass and less than or equal to 0.02 parts by mass, more preferably greater than or equal to 0.005 parts by mass and less than or equal to 0.02 parts by mass, and still more preferably greater than or equal to 0.01 parts by mass and less than or equal to 0.02 parts by mass with respect to 100 parts by mass of the positive electrode active material, for example, from the viewpoint of being able to further improve the rapid charging characteristics and the resistance increase associated with charge/discharge cycles.

The single-walled carbon nanotube (SWCNT) and the multi-walled carbon nanotube (MWCNT) preferably contain substantially no metal catalyst in the tube. In general, a carbon nanotube is synthesized using a metal catalyst, but if the metal catalyst remains in the carbon nanotube, the metal catalyst may degrade the positive electrode 11 and deteriorate the characteristics of the secondary battery. Therefore, the carbon nanotube is preferably subjected to a treatment such as washing with, for example, an acidic aqueous solution to remove the metal catalyst. Here, the phrase "contain substantially no metal catalyst" means that a metal catalyst is contained only at or below the lower detection limit by ICP-AES.

Examples of the binder include fluororesins such as polytetrafluoroethylene (PTFE) and polyvinylidene fluoride (PVDF), polyacrylonitrile (PAN), a polyimide resin, an acrylic resin, a polyolefin resin, styrene-butadiene rubber (SBR), carboxymethyl cellulose (CMC), polyacrylic acid (PAA), and polyethylene oxide (PEO). The content of the binder may be, for example, in a range greater than or equal to 0.1 mass% and less than or equal to 5 mass% with respect to the total mass of the positive electrode mixture layer.

The positive electrode 11 can be prepared by applying a positive electrode mixture slurry containing a positive electrode active material, a carbon nanotube, and the like onto a positive electrode core, drying the coating film, followed by rolling to form a positive electrode mixture layer on the positive electrode core. From the viewpoint of improving the dispersibility of the carbon nanotube, it is preferable to add at least one of a hydrogenated nitrile-butadiene copolymer (HNBR) and a cellulose derivative to the positive electrode mixture slurry. That is, by the incorporation of a hydrogenated nitrile-butadiene copolymer and a cellulose derivative in the positive electrode mixture layer, the carbon nanotube in the positive electrode mixture layer is maintained in a highly dispersed state, so that the resistance of the positive electrode mixture layer can be further reduced, and the rapid charging characteristics can be further improved. The thickness of the positive electrode mixture layer is, for example, greater than or equal to 10 µm and less than or equal to 150 µm on one side of the positive electrode core.

The porosity of the positive electrode mixture layer is preferably, for example, greater than or equal to 22%. When the porosity of the positive electrode mixture layer satisfies the above range, for example, the electrolyte solution discharged by swelling of the negative electrode mixture layer during charging can be easily retained in the positive electrode mixture layer. This may make it possible to suppress depletion of the electrolyte solution within the electrode and further improve the rapid charging characteristics and the resistance increase associated with charge/discharge cycles. The upper limit of the porosity of the positive electrode mixture layer may be less than or equal to 40%. The porosity of the positive electrode mixture layer can be adjusted by, for example, the content of the carbon nanotube. The porosity of the positive electrode mixture layer can also be adjusted by, for example, the rolling force for the coating film of the positive electrode mixture slurry.

The porosity of the positive electrode mixture layer is measured as follows. A part of the positive electrode 11 taken out from the non-aqueous electrolyte secondary battery in a discharged state is cut out and processed by an ion milling apparatus (for example, IM4000PLUS manufactured by Hitachi High-Tech Corporation) to expose a cross section of the positive electrode mixture layer. A backscattered electron image of the exposed cross section of the positive electrode mixture layer is captured using a scanning electron microscope. The cross-sectional image of the positive electrode mixture layer obtained as described above is imported into a computer, and binarization processing is performed using image analysis software (for example, ImageJ manufactured by the National Institutes of Health, USA) to obtain a binarized image in which particle cross-sections in the cross-sectional image are converted to black and voids between particles are converted to white. The porosity of the positive electrode mixture layer can be determined by calculating the area of the white regions in the binarized image and calculating the ratio of the area of the white regions to the area of the cross-sectional image of the positive electrode mixture layer.

The negative electrode 12 includes, for example, a negative electrode core and a negative electrode mixture layer disposed on the negative electrode core. The negative electrode mixture layer may be formed on only one surface or both surfaces of the negative electrode core. Examples of the negative electrode core include a foil of a metal, such as copper or a copper alloy, which is stable in a potential range of the negative electrode 12, and a film in which the metal is disposed on a surface layer. The thickness of the negative electrode core is, for example, greater than or equal to 5 µm and less than or equal to 50 µm. The negative electrode mixture layer contains a negative electrode active material containing a Si-based material. The negative electrode mixture layer may contain a binder or the like. The negative electrode 12 can be prepared by, for example, applying a negative electrode mixture slurry containing a negative electrode active material and the like onto a negative electrode core, drying the coating film, and then compressing the film to form a negative electrode mixture layer on the negative electrode core. The thickness of the negative electrode mixture layer is, for example, greater than or equal to 10 µm and less than or equal to 150 µm on one side of the negative electrode core.

Examples of the Si-based material include Si, a Si alloy, and a Si compound. In addition, the Si-based material may be, for example, composite particles having an ion-conductive phase and a silicon phase (silicon particles from one viewpoint) dispersed in the ion-conductive phase. The ion-conductive phase is a phase that conducts ions, and examples thereof include a silicate phase, a carbon phase, and a silicon oxide phase.

The carbon phase may include, for example, amorphous carbon (amorphous carbon). Examples of the amorphous carbon constituting the carbon layer include hard carbon, soft carbon, and other amorphous carbon. The amorphous carbon is, for example, a carbon material in which an average interlayer spacing d₀₀₂ of (002) plane measured by an X-ray diffraction method exceeds 0.34 nm.

A main component (for example, greater than or equal to 95 mass% and less than or equal to 100 mass%) of the silicon oxide phase may be silicon dioxide. The composition of the composite particle including the silicon oxide phase and the silicon phase dispersed therein can be represented by SiOₓ as a whole. SiOx has a structure in which silicon fine particles are dispersed in amorphous SiO₂. A content ratio x of oxygen to silicon is, for example, preferably 0.5 ≤ x < 2.0, and more preferably 0.8 ≤ x ≤ 1.5.

The silicate phase may satisfy the following conditions (1) and/or (2).
(1) The silicate phase contains at least one selected from the group consisting of an alkali metal element and a Group 2 element (Group 2 element of the long form of the periodic table).
(2) The silicate phase contains an element L. The element L is at least one selected from the group consisting of B, Al, Zr, Nb, Ta, V, lanthanoid, Y, Ti, P, Bi, Zn, Sn, Pb, Sb, Co, Er, F, and W. Note that the lanthanoid is a generic term for 15 elements from lanthanum (La) with an atomic number 57 to lutetium (Lu) with an atomic number 71.

With regard to the condition (1), examples of the alkali metal element include lithium (Li), potassium (K), and sodium (Na). Examples of the Group 2 element include magnesium (Mg), calcium (Ca), strontium (Sr), and barium (Ba). By containing the alkali metal element and/or the Group 2 element, an irreversible capacity of the silicate phase may be reduced. The silicate phase (hereinafter, it may be referred to as a "lithium silicate phase") containing lithium is preferable, for example, from the viewpoint of having a small irreversible capacity and high initial charging and discharging efficiency.

The lithium silicate phase only needs to be an oxide phase containing Li, Si, and O, and may contain other elements. An atomic ratio of O to Si: O/Si in the lithium silicate phase is, for example, greater than 2 and less than 4. Preferably, O/Si is greater than 2 and less than 3. An atomic ratio of Li to Si: Li/Si in the lithium silicate phase is, for example, greater than 0 and less than 4.

The lithium silicate phase may include a lithium silicate phase represented by a formula: Li_{2z}SiO_{(2+z)} (0 < z < 2), or may include the lithium silicate phase. z preferably satisfies a relationship of 0 < z < 1, and is more preferably z = 1/2 (that is, Li₂Si₂O₅).

In addition, the Si-based material may include a composite particle containing an ion-conductive phase and a silicon phase dispersed in the ion-conductive phase, and a coating layer covering at least a part of a surface of the composite particle.

The coating layer present on the surface of the composite particle includes, for example, a conductive layer. By forming the conductive layer on the surface of the composite particle, the conductivity of the Si-based material can be improved. As the conductive material constituting the conductive layer, a conductive material containing carbon is preferable. Examples of the conductive material containing carbon include a conductive carbon material. Examples of the conductive carbon material include carbon black, graphite, and amorphous carbon having low crystallinity (amorphous carbon). The amorphous carbon is preferable in that it has a large buffering action on the silicon phase that changes in volume by charging and discharging. The amorphous carbon may be easily graphitizable carbon (soft carbon) or hardly graphitizable carbon (hard carbon). Examples of the carbon black include acetylene black and Ketjenblack. The thickness of the conductive layer may be, for example, in a range of greater than or equal to 1 nm and less than or equal to 200 nm. The thickness of the conductive layer can be measured by observing a cross section of the Si-containing material using SEM or TEM (transmission electron microscope).

The content of the Si-based material is preferably greater than or equal to 5 mass% with respect to the total mass of the negative electrode active material from the viewpoint of increasing the secondary battery capacity, or the like. In addition, from the viewpoint of increasing the secondary battery capacity, suppressing swelling of the negative electrode, or the like, the content of the Si-based material is preferably greater than or equal to 5 mass% and less than or equal to 50 mass%, and more preferably greater than or equal to 10 mass% and less than or equal to 30 mass% with respect to the total amount of the negative electrode active material.

The negative electrode active material may contain, in addition to the Si-based material, a material capable of reversibly occluding and releasing lithium ions other than the Si-based material. Examples of the material other than the Si-based material include carbon materials such as natural graphite such as flake graphite, massive graphite, and earthy graphite, and artificial graphite such as massive artificial graphite and graphitized mesophase-carbon microbeads. Further, for example, a metal to be alloyed with lithium such as Sn, an alloy containing the metal, a compound containing the metal, or the like may be used. Examples of the binder include materials similar to those for the positive electrode 11. The negative electrode mixture layer may contain a conductive agent.

As the separator 13, for example, a porous sheet having ion permeability and insulating properties is used. Specific examples of the porous sheet include a microporous thin film, a woven fabric, and a nonwoven fabric. The material of the separator 13 is preferably a polyolefin resin such as polyethylene or polypropylene, cellulose, or the like. The separator 13 may have either a single layer structure or a laminated structure. On the surface of the separator 13, a heat-resistant layer or the like may be formed.

The non-aqueous electrolyte secondary battery of the present embodiment is preferably applied to a battery having a relatively large capacity in that the effect of suppressing resistance increase associated with charge/discharge cycles and exhibiting excellent rapid charging characteristics is remarkably exhibited, and is preferably, for example, a non-aqueous electrolyte secondary battery that satisfies B/A > 40 Ah/m² when an area of the positive electrode mixture layer is defined as A (m²), and a battery capacity obtained by discharging from 4.2 V to 2.5 V at a constant current of 0.05C from a state of being charged to 4.2 V at a constant current of 1C and then charged at a constant voltage of 4.2 V until a current value reaches 0.02C in a temperature environment of 25°C is defined as B (Ah). The area A of the positive electrode mixture layer is, for example, the sum of the area of the front surface and the area of the back surface when the positive electrode mixture layer is provided on both of the front surface side of the positive electrode core and the back surface of the positive electrode mixture layer.

### EXAMPLES

Hereinafter, the present disclosure will be further described with reference to Examples, but the present disclosure is not limited to these Examples.

### <Example 1>

### [Preparation of positive electrode active material of polycrystalline particles]

[Ni_{0.8}Co_{0.15}Al_{0.05}](OH)₂ obtained by a coprecipitation method and LiOH were mixed in a Ishikawa-type grinding mortar so that the molar ratio of Li, Li, and the total amount of Ni, Co, and Al was 1.1:1.0. Thereafter, this mixture was fired at 730°C for 50 hours in an oxygen atmosphere, and the obtained fired product was pulverized to obtain a positive electrode active material of polycrystalline particles.

The positive electrode active material of polycrystalline particles was embedded in a resin, a cross section of the particle was prepared by cross section polisher (CP) processing, and the cross section was observed by SEM. As a result, the positive electrode active material of polycrystalline particles was found to be particles in which several hundreds or more primary particles were aggregated. The average particle diameter of the positive electrode active material of polycrystalline particles was 12 µm.

### [Preparation of positive electrode active material of single-crystalline particles]

[Ni_{0.8}Co_{0.15}Al_{0.05}](OH)₂ obtained by a coprecipitation method and LiOH were mixed in a Ishikawa-type grinding mortar so that the molar ratio of Li and the total amount of Ni, Co, and Al was 1.1:1.0. Thereafter, this mixture was fired at 800°C for 50 hours in an oxygen atmosphere, and the obtained fired product was pulverized to obtain a positive electrode active material of single-crystalline particles.

The positive electrode active material of single-crystalline particles was embedded in a resin, a cross section of the particle was prepared by cross section polisher (CP) processing, and the cross section was observed by SEM. As a result, the positive electrode active material of single-crystalline particles was found to be particles that existed either in a state where the particles were completely separated into individual primary particles, or in a state where 2 to 10 primary particles were gathered together. The average particle diameter of the positive electrode active material of single-crystalline particles was 4 µm.

### [Preparation of positive electrode]

A positive electrode mixture slurry was prepared by mixing 100 parts by mass of a positive electrode active material, which was obtained by mixing a positive electrode active material of polycrystalline particles and a positive electrode active material of single-crystalline particles at a mass ratio of 80:20, 0.01 parts by mass of a multi-walled carbon nanotube (MWCNT), 0.0001 parts by mass of a single-walled carbon nanotube, and 1 part by mass of polyvinylidene fluoride (PVDF), and adding an appropriate amount of N-methyl-2-pyrrolidone (NMP) thereto. The positive electrode mixture slurry was applied to both surfaces of an aluminum foil as a positive electrode core, and the coating film was dried and rolled to obtain a positive electrode in which a positive electrode mixture layer was formed on the positive electrode core.

### [Preparation of negative electrode]

A negative electrode mixture slurry was prepared by mixing 95 parts by mass of graphite, 5 parts by mass of Si oxide (SiO), 1 part by mass of carboxymethyl cellulose, and 1 part by mass of styrene-butadiene rubber, and adding an appropriate amount of water thereto. The negative electrode mixture slurry was applied to both surfaces of a copper foil as a negative electrode core, and the coating film was dried and rolled to obtain a negative electrode in which a negative electrode mixture layer was formed on the negative electrode core.

### [Preparation of non-aqueous electrolyte]

A non-aqueous electrolyte solution was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF₆) therein at a concentration of 1.5 mol/liter.

### [Preparation of non-aqueous electrolyte secondary battery]

(1) A positive electrode lead was attached to the positive electrode, and a negative electrode lead was attached to the negative electrode, and then the positive electrode and the negative electrode were wound with a separator made of a polyethylene microporous film interposed between the positive electrode and the negative electrode to prepare a wound-type electrode assembly.
(2) Insulating plates were disposed above and below the electrode assembly, respectively, and the negative electrode lead was welded to a case body. The positive electrode lead was welded to a sealing assembly, and the electrode assembly was housed in the case body.
(3) The non-aqueous electrolyte was injected into the case body with a reduced pressure method, and then an opening of the case body was sealed with the sealing assembly via a gasket. This was used as a non-aqueous electrolyte secondary battery.

### <Comparative Example 1>

The positive electrode active material of single-crystalline particles was changed to a positive electrode active material of polycrystalline particles having an average particle diameter of 4 µm. Polycrystalline particles having an average particle diameter of 4 µm were prepared in the same manner except that the fired product was pulverized until the average particle diameter reached 4 µm in the preparation of polycrystalline particles having an average particle diameter of 12 µm. In addition, the single-walled carbon nanotube was not used, and the addition amount of the multi-walled carbon nanotube was changed to 0.2 parts by mass. A non-aqueous electrolyte secondary battery was prepared in the same manner as in Example 1 except for the above.

### <Comparative Example 2>

A non-aqueous electrolyte secondary battery was prepared in the same manner as in Example 1 except that the positive electrode active material of single-crystalline particles was changed to a positive electrode active material of polycrystalline particles having an average particle diameter of 4 µm.

### <Comparative Example 3>

A non-aqueous electrolyte secondary battery was prepared in the same manner as in Example 1 except that the positive electrode active material of single-crystalline particles was changed to a positive electrode active material of polycrystalline particles having an average particle diameter of 4 µm, the multi-walled carbon nanotube was not used, and the addition amount of the single-walled carbon nanotube was changed to 0.01 parts by mass.

### <Comparative Example 4>

A non-aqueous electrolyte secondary battery was prepared in the same manner as in Example 1 except that the positive electrode active material of single-crystalline particles was not used, the single-walled carbon nanotube was not used, and the addition amount of the multi-walled carbon nanotube was changed to 0.2 parts by mass.

### <Comparative Example 5>

A non-aqueous electrolyte secondary battery was prepared in the same manner as in Example 1 except that the positive electrode active material of single-crystalline particles was not used.

### <Comparative Example 6>

A non-aqueous electrolyte secondary battery was prepared in the same manner as in Example 1 except that the positive electrode active material of single-crystalline particles was not used, the multi-walled carbon nanotube was not used, and the addition amount of the single-walled carbon nanotube was changed to 0.01 parts by mass.

### <Comparative Example 7>

A non-aqueous electrolyte secondary battery was prepared in the same manner as in Example 1 except that the single-walled carbon nanotube was not used, and the addition amount of the multi-walled carbon nanotube was changed to 0.2 parts by mass.

### <Comparative Example 8>

A non-aqueous electrolyte secondary battery was prepared in the same manner as in Example 1 except that the multi-walled carbon nanotube was not used, and the addition amount of the single-walled carbon nanotube was changed to 0.01 parts by mass.

### [Rapid charging test]

In an environment of 25°C, the non-aqueous electrolyte secondary battery of each of Example 1 and Comparative Examples was subjected to constant current charging at 1C until the battery voltage reached 4.2 V, followed by constant current discharging to 2.5 V at 0.5C. This charging and discharging operation was defined as one cycle, and 300 cycles were performed. Then, the capacity retention rate in the rapid charging test was determined by the following formula, and the results are summarized in Table 1. However, as for the capacity retention rates in the rapid charging test shown in Table 1, the capacity retention rate of each of Example 1 and Comparative Examples is expressed relatively with the capacity retention rate of Comparative Example 1 as a reference (100). When the capacity retention rate exceeds 100, it can be evaluated that the battery has excellent rapid charging characteristics. 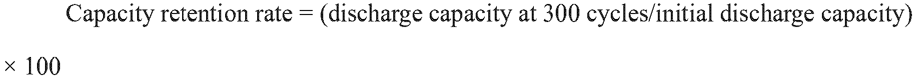 Capacity retention rate = (discharge capacity at 300 cycles/initial discharge capacity) × 100

### [Measurement of resistance increase rate in charge/discharge cycle test]

In an environment of 25°C, the non-aqueous electrolyte secondary battery of each of Example 1 and Comparative Examples was charged to SOC 50% at a constant current of 0.5C. The voltage at this time was defined as V0. Next, discharging was performed at a constant current of 0.5C for 10 seconds. The voltage at this time was defined as V1. Then, the direct current resistance (DCR) was determined from the following formula. This is defined as the initial resistance. $DCR = \left(V0-V1\right) / 0.5 C$

Then, under an environmental temperature of 25°C, the non-aqueous electrolyte secondary batteries of the respective embodiments and the respective comparative examples were charged at a constant voltage at a constant current of 0.5 C until a voltage reached 4.2 V, and then charged at a constant voltage until the current reached 0.05 C. Thereafter, each of the batteries was subjected to constant current discharging at a constant current of 0.5C until the battery voltage reached 2.5 V. This charging and discharging operation was defined as one cycle, and 300 cycles were performed. Then, the direct current resistance of the non-aqueous electrolyte secondary battery of each of Example 1 and Comparative Examples after 300 cycles was determined in the same manner as described above. This is defined as the resistance after charge/discharge cycles.

The initial resistance and the resistance after charge/discharge cycles were applied to the following formula to determine the resistance increase rate, and the results are summarized in Table 1. However, as for the resistance increase rates shown in Table 1, the resistance increase rate of each of Example 1 and Comparative Examples is expressed relatively with the resistance increase rate of Comparative Example 1 as a reference (100). When the resistance increase rate is less than 100, it can be evaluated that the resistance increase associated with charge/discharge cycles was suppressed. 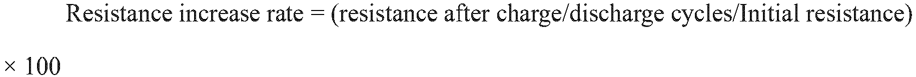 Resistance increase rate = (resistance after charge/discharge cycles/Initial resistance) × 100

**[Table 1]**

| | | Example 1 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Active material | Positive electrode active material A | MC | MC | MC | MC | MC | MC | MC | MC | SC |
| | Positive electrode active material B | SC | MC | MC | MC | - | - | - | SC | SC |
| | Ratio of positive electrode active material B (M_{B}/(M_{A}+M_{B})×100) | 20% | 20% | 20% | 20% | - | - | - | 20% | 20% |
| | Particle diameter ratio (D_{A}/D_{B}) | 3 | 3 | 3 | 3 | - | - | - | 3 | 3 |
| Conductive agent | Addition amount of MWCNT (parts by mass) | 0.1 | 0.2 | 0.1 | - | 0.2 | 0.1 | - | 0.2 | - |
| | Addition amount of SWCNT (parts by mass) | 0.005 | - | 0.005 | 0.01 | - | 0.005 | 0.01 | - | 0.01 |
| Results | Capacity retention rate in rapid charging test | 104 | 100 | 100 | 97 | 94 | 95 | 94 | 102 | 98 |
| | Resistance increase rate in charge/discharge cycle test | 91 | 100 | 98 | 100 | 114 | 111 | 100 | 106 | 98 |

| | | | | | | | | | | |
|---|---|---|---|---|---|---|---|---|---|---|
| MC: polycrystalline particles, SC: single-crystalline particles M_{A}: mass of positive electrode active material A, M_{B}: mass of positive electrode active material B D_{A}: average particle diameter of positive electrode active material A, D_{B}: average particle diameter of positive electrode active material B MWCNT: multi-walled carbon nanotube, SWCNT: single-walled carbon nanotube | | | | | | | | | | |

As shown in Table 1, Example 1 resulted in a higher capacity retention rate in the rapid charging test and a lower resistance increase rate in the charge/discharge cycle test as compared with Comparative Example 1. Comparative Examples 2 to 8 did not show both favorable effects of a higher capacity retention rate in the rapid charging test and a lower resistance increase rate in the charge/discharge cycle test as compared with Comparative Example 1. From these results, it can be said that a non-aqueous electrolyte secondary battery, in which a negative electrode has a negative electrode mixture layer containing a negative electrode active material including a Si-based material, a positive electrode has a positive electrode mixture layer containing a positive electrode active material and a conductive agent, the positive electrode active material includes a positive electrode active material A of polycrystalline particles and a positive electrode active material B of single-crystalline particles, an average particle diameter (D_{B}) of the positive electrode active material B is smaller than an average particle diameter (D_{A}) of the positive electrode active material A, and the conductive agent contains a single-walled carbon nanotube and a multi-walled carbon nanotube, suppresses resistance increase associated with charge/discharge cycles and has excellent rapid charging characteristics.

### <Example 2>

A non-aqueous electrolyte secondary battery was prepared in the same manner as in Example 1 except that the positive electrode active material of polycrystalline particles and the positive electrode active material of single-crystalline particles were mixed at a mass ratio of 90:10, and the rapid charging test and the measurement of the resistance increase rate in the charge/discharge cycle test were performed.

### <Example 3>

A non-aqueous electrolyte secondary battery was prepared in the same manner as in Example 1 except that the positive electrode active material of polycrystalline particles and the positive electrode active material of single-crystalline particles were mixed at a mass ratio of 70:30, and the rapid charging test and the measurement of the resistance increase rate in the charge/discharge cycle test were performed.

### <Example 4>

A non-aqueous electrolyte secondary battery was prepared in the same manner as in Example 1 except that the positive electrode active material of polycrystalline particles and the positive electrode active material of single-crystalline particles were mixed at a mass ratio of 60:40, and the rapid charging test and the measurement of the resistance increase rate in the charge/discharge cycle test were performed.

The results of the capacity retention rate in the rapid charging test and the resistance increase rate in the charge/discharge cycle test in Examples 1 to 4 and Comparative Example 2 are summarized in Table 2. However, as for the capacity retention rates and the resistance increase rates shown in Table 2, the value of each Example is expressed relatively with the value of Comparative Example 2 as a reference (100).

**[Table 2]**

| | | Example 2 | Example 1 | Example 3 | Example 4 | Comparative Example 2 |
|---|---|---|---|---|---|---|
| Active material | Positive electrode active material A | MC | MC | MC | MC | MC |
| | Positive electrode active material B | SC | SC | SC | SC | MC |
| | Ratio of positive electrode active material B (M_{B}/(M_{A}+M_{B})×100) | 10% | 20% | 30% | 40% | 20 |
| | Particle diameter ratio (D_{A}/D_{B}) | 3 | 3 | 3 | 3 | 3 |
| Conductive agent | Addition amount of MWCNT (parts by mass) | 0.1 | 0.1 | 0.1 | 0.1 | 0.1 |
| | Addition amount of SWCNT (parts by mass) | 0.005 | 0.005 | 0.005 | 0.005 | 0.005 |
| Results | Capacity retention rate in rapid charging test | 101.3 | 104 | 103.4 | 102.7 | 100 |
| | Resistance increase rate in charge/discharge cycle test | 97 | 93 | 93 | 97 | 100 |

| | | | | | | |
|---|---|---|---|---|---|---|
| MC: polycrystalline particles, SC: single-crystalline particles M_{A}: mass of positive electrode active material A, M_{B}: mass of positive electrode active material B D_{A}: average particle diameter of positive electrode active material A, D_{B}: average particle diameter of positive electrode active material B MWCNT: multi-walled carbon nanotube, SWCNT: single-walled carbon nanotube | | | | | | |

As shown in Table 2, Examples 1 to 4 in which the ratio ((M_{B}/(M_{A}+M_{B}))×100) of the mass (M_{B}) of the positive electrode active material B of single-crystalline particles to the total mass (M_{A}+M_{B}) of the positive electrode active material A of polycrystalline particles and the positive electrode active material B of single-crystalline particles is greater than or equal to 10 mass% and less than or equal to 40 mass% suppress resistance increase associated with charge/discharge cycles and have excellent rapid charging characteristics as compared with Comparative Example 2 in which the positive electrode active material of single-crystalline particles is not used. Among Examples 1 to 4, Examples 1, 3, and 4 in which the ratio of the mass (M_{B}) of the positive electrode active material B is greater than or equal to 20% and less than or equal to 40% are preferable from the viewpoint of exhibiting more excellent rapid charging characteristics. Furthermore, among Examples 1, 3, and 4, Examples 1 and 3 in which the ratio of the mass (M_{B}) of the positive electrode active material B is greater than or equal to 20% and less than or equal to 30% are preferable from the viewpoint that resistance increase associated with charge/discharge cycles can be further suppressed.

### <Example 5>

A non-aqueous electrolyte secondary battery was prepared in the same manner as in Example 1 except that the positive electrode active material of polycrystalline particles having an average particle diameter of 10 µm and the positive electrode active material of single-crystalline particles having an average particle diameter of 5 µm were used, and the rapid charging test and the measurement of the resistance increase rate in the charge/discharge cycle test were performed.

### <Example 6>

A non-aqueous electrolyte secondary battery was prepared in the same manner as in Example 1 except that the positive electrode active material of polycrystalline particles having an average particle diameter of 12 µm and the positive electrode active material of single-crystalline particles having an average particle diameter of 3 µm were used, and the rapid charging test and the measurement of the resistance increase rate in the charge/discharge cycle test were performed.

### <Example 7>

A non-aqueous electrolyte secondary battery was prepared in the same manner as in Example 1 except that the positive electrode active material of polycrystalline particles having an average particle diameter of 15 µm and the positive electrode active material of single-crystalline particles having an average particle diameter of 3 µm were used, and the rapid charging test and the measurement of the resistance increase rate in the charge/discharge cycle test were performed.

### <Example 8>

A non-aqueous electrolyte secondary battery was prepared in the same manner as in Example 1 except that the positive electrode active material of polycrystalline particles having an average particle diameter of 12 µm and the positive electrode active material of single-crystalline particles having an average particle diameter of 2 µm were used, and the rapid charging test and the measurement of the resistance increase rate in the charge/discharge cycle test were performed.

The results of the capacity retention rate in the rapid charging test and the resistance increase rate in the charge cycle test in Examples 1, and 5 to 8 and Comparative Example 2 are summarized in Table 3. However, as for the capacity retention rates and the resistance increase rates shown in Table 3, the value of each Example is expressed relatively with the value of Comparative Example 2 as a reference (100).

**[Table 3]**

| | | Example 5 | Example 1 | Example 6 | Example 7 | Example 8 | Comparative Example 2 |
|---|---|---|---|---|---|---|---|
| Active material | Positive electrode active material A | MC | MC | MC | MC | MC | MC |
| | Positive electrode active material B | SC | SC | SC | SC | SC | MC |
| | Ratio of positive electrode active material B (M_{B}/(M_{A}+M_{B})×100) | 20% | 20% | 20% | 20% | 20% | 20 |
| | Particle diameter ratio (D_{A}/D_{B}) | 2 | 3 | 4 | 5 | 6 | 3 |
| Conductive agent | Addition amount of MWCNT (parts by mass) | 0.1 | 0.1 | 0.1 | 0.1 | 0.1 | 0.1 |
| | Addition amount of SWCNT (parts by mass) | 0.005 | 0.005 | 0.005 | 0.005 | 0.005 | 0.005 |
| Results | Capacity retention rate in rapid charging test | 101 | 104 | 103.5 | 102 | 101 | 100 |
| | Resistance increase rate in charge/discharge cycle test | 95 | 93 | 94 | 96 | 99.6 | 100 |

| | | | | | | | |
|---|---|---|---|---|---|---|---|
| MC: polycrystalline particles, SC: single-crystalline particles M_{A}: mass of positive electrode active material A, M_{B}: mass of positive electrode active material B D_{A}: average particle diameter of positive electrode active material A, D_{B}: average particle diameter of positive electrode active material B MWCNT: multi-walled carbon nanotube, SWCNT: single-walled carbon nanotube | | | | | | | |

As shown in Table 3, Examples 1, and 5 to 8, in which the ratio (D_{A}/D_{B}) of the average particle diameter (D_{A}) of the positive electrode active material A of polycrystalline particles to the average particle diameter (D_{B}) of the positive electrode active material B of single-crystalline particles is greater than or equal to 2 and less than or equal to 6, suppress resistance increase associated with charge/discharge cycles and have excellent rapid charging characteristics as compared with Comparative Example 2 in which the positive electrode active material of single-crystalline particles is not used. Among Examples 1, and 5 to 8, Examples 1, 6, and 7 in which D_{A}/D_{B} is greater than or equal to 3 and less than or equal to 5 are preferable from the viewpoint of exhibiting more excellent rapid charging characteristics. Furthermore, among Examples 1, 6, and 7, Examples 1 and 6 in which D_{A}/D_{B} is greater than or equal to 3 and less than or equal to 4 are preferable from the viewpoint that resistance increase associated with charge/discharge cycles can be further suppressed.

### <Example 9>

A non-aqueous electrolyte secondary battery was prepared in the same manner as in Example 1 except that the addition amount of the multi-walled carbon nanotube was changed to 0.01 parts by mass and the addition amount of the single-walled carbon nanotube was changed to 0.0001 parts by mass, and the rapid charging test and the measurement of the resistance increase rate in the charge/discharge cycle test were performed. The porosity of the positive electrode mixture layer was 24%.

### <Example 10>

A non-aqueous electrolyte secondary battery was prepared in the same manner as in Example 1 except that the addition amount of the multi-walled carbon nanotube was changed to 0.2 parts by mass and the addition amount of the single-walled carbon nanotube was changed to 0.01 parts by mass, and the rapid charging test and the measurement of the resistance increase rate in the charge/discharge cycle test were performed. The porosity of the positive electrode mixture layer was 23%.

### <Example 11>

A non-aqueous electrolyte secondary battery was prepared in the same manner as in Example 1 except that the addition amount of the multi-walled carbon nanotube was changed to 0.5 parts by mass and the addition amount of the single-walled carbon nanotube was changed to 0.02 parts by mass, and the rapid charging test and the measurement of the resistance increase rate in the charge/discharge cycle test were performed. The porosity of the positive electrode mixture layer was 22%.

### <Comparative Example 9>

A non-aqueous electrolyte secondary battery was prepared in the same manner as in Example 1 except that the multi-walled carbon nanotube and the single-walled carbon nanotube were not used and 1 part by mass of acetylene black was added, and the rapid charging test and the measurement of the resistance increase rate in the charge/discharge cycle test were performed. The porosity of the positive electrode mixture layer was 20%.

As a result of measuring the porosity of the positive electrode mixture layer in Example 1 and Comparative Example 2, the porosity was 23% in both Example 1 and Comparative Example 2.

The results of the capacity retention rate in the rapid charging test and the resistance increase rate in the charge/discharge cycle test in Examples 1, and 9 to 11 and Comparative Examples 2 and 9 are summarized in Table 4. However, as for the capacity retention rates and the resistance increase rates shown in Table 4, the values of each Example and Comparative Example 9 are expressed relatively with the value of Comparative Example 2 as a reference (100).

**[Table 4]**

| | | Example 9 | Example 1 | Example 10 | Example 11 | Comparative Example 9 | Comparative Example 2 |
|---|---|---|---|---|---|---|---|
| Active material | Positive electrode active material A | MC | MC | MC | MC | MC | MC |
| | Positive electrode active material B | SC | SC | SC | SC | SC | MC |
| | Ratio of positive electrode active material B (M_{B}/(M_{A}+M_{B})×100) | 20% | 20% | 20% | 20% | 20% | 20 |
| | Particle diameter ratio (D_{A}/D_{B}) | 3 | 3 | 3 | 3 | 3 | 3 |
| Conductive agent | Addition amount of MWCNT (parts by mass) | 0.01 | 0.1 | 0.2 | 0.5 | - | 0.1 |
| | Addition amount of SWCNT (parts by mass) | 0.0001 | 0.005 | 0.01 | 0.02 | - | 0.005 |
| | Addition amount of AB (parts by mass) | - | - | - | - | 1 | - |
| Positive electrode | Porosity of positive electrode mixture layer | 24% | 23% | 23% | 22% | 20% | 23% |
| Results | Capacity retention rate in rapid charging test | 103 | 104 | 106 | 104 | 80 | 100 |
| | Resistance increase rate in charge/discharge cycle test | 99 | 93 | 91 | 88 | 110 | 100 |

| | | | | | | | |
|---|---|---|---|---|---|---|---|
| MC: polycrystalline particles, SC: single-crystalline particles M_{A}: mass of positive electrode active material A, M_{B}: mass of positive electrode active material B D_{A}: average particle diameter of positive electrode active material A, D_{B}: average particle diameter of positive electrode active material B MWCNT: multi-walled carbon nanotube, SWCNT: single-walled carbon nanotube, AB: acetylene black | | | | | | | |

In Examples 1, and 9 to 11, the positive electrode active material A of polycrystalline particles and the positive electrode active material B of single-crystalline particles having an average particle diameter smaller than that of the positive electrode active material A are used as the positive electrode active material, the content of the multi-walled carbon nanotube as the conductive agent is greater than or equal to 0.01 parts by mass and less than or equal to 0.5 parts by mass with respect to 100 parts by mass of the positive electrode active material, and the content of the single-walled carbon nanotube as the conductive agent is greater than or equal to 0.0001 parts by mass and less than or equal to 0.02 parts by mass with respect to 100 parts by mass of the positive electrode active material. As shown in Table 4, Examples 1, and 9 to 11 suppress resistance increase associated with charge/discharge cycles and have excellent rapid charging characteristics as compared with Comparative Example 2 in which the single-walled carbon nanotube and the multi-walled carbon nanotube are used as the conductive agent, but the positive electrode active material of single-crystalline particles is not used. Comparative Example 9, in which the positive electrode active material A of polycrystalline particles and the positive electrode active material B of single-crystalline particles having a smaller average particle diameter than that of the positive electrode active material A are used as the positive electrode active material, but acetylene black was used without using the carbon nanotube as the conductive agent, showed deterioration in both the resistance increase associated with charge/discharge cycles and the rapid charging characteristics as compared with Comparative Example 2.

Among Examples 1, and 9 to 11, Examples 1, 10, and 11, in which the content of the multi-walled carbon nanotube is greater than or equal to 0.1 parts by mass and less than or equal to 0.5 parts by mass with respect to 100 parts by mass of the positive electrode active material, and the content of the single-walled carbon nanotube is greater than or equal to 0.005 parts by mass and less than or equal to 0.02 parts by mass with respect to 100 parts by mass of the positive electrode active material, are preferable from the viewpoint of exhibiting more excellent rapid charging characteristics. Furthermore, among Examples 1, 10, and 11, Examples 10 and 11, in which the content of the multi-walled carbon nanotube is greater than or equal to 0.2 parts by mass and less than or equal to 0.5 parts by mass with respect to 100 parts by mass of the positive electrode active material, and the content of the single-walled carbon nanotube is greater than or equal to 0.01 parts by mass and less than or equal to 0.02 parts by mass with respect to 100 parts by mass of the positive electrode active material, are preferable from the viewpoint that resistance increase associated with charge/discharge cycles can be further suppressed.

The present disclosure is further described by the following embodiments.

### Configuration 1:

A non-aqueous electrolyte secondary battery including a positive electrode, a negative electrode, and a non-aqueous electrolyte, in which
the negative electrode has a negative electrode mixture layer containing a negative electrode active material including a Si-based material,
the positive electrode has a positive electrode mixture layer containing a positive electrode active material and a conductive agent,
the positive electrode active material includes a positive electrode active material A of polycrystalline particles and a positive electrode active material B of single-crystalline particles, an average particle diameter (D_{B}) of the positive electrode active material B is smaller than an average particle diameter (D_{A}) of the positive electrode active material A, and
the conductive agent contains a single-walled carbon nanotube and a multi-walled carbon nanotube.

### Configuration 2:

The non-aqueous electrolyte secondary battery according to configuration 1, in which the positive electrode mixture layer has a porosity greater than or equal to 22%.

### Configuration 3:

The non-aqueous electrolyte secondary battery according to configuration 1 or 2, in which a ratio (D_{A}/D_{B}) of an average particle diameter (D_{A}) of the positive electrode active material A to an average particle diameter (D_{B}) of the positive electrode active material B is greater than or equal to 2 and less than or equal to 6.

### Configuration 4:

The non-aqueous electrolyte secondary battery according to any one of configurations 1 to 3, in which a ratio ((M_{B}/(M_{A}+M_{B}))×100) of a mass (M_{B}) of the positive electrode active material B to a total mass (M_{A}+M_{B}) of the positive electrode active material A and the positive electrode active material B is greater than or equal to 10 mass% and less than or equal to 40 mass%.

### Configuration 5:

The non-aqueous electrolyte secondary battery according to any one of configurations 1 to 4, in which
a content of the multi-walled carbon nanotube is greater than or equal to 0.01 parts by mass and less than or equal to 0.5 parts by mass with respect to 100 parts by mass of the positive electrode active material, and
a content of the single-walled carbon nanotube is greater than or equal to 0.0001 parts by mass and less than or equal to 0.02 parts by mass with respect to 100 parts by mass of the positive electrode active material.

### Configuration 6:

The non-aqueous electrolyte secondary battery according to any one of configurations 1 to 5, in which when an area of the positive electrode mixture layer is defined as A (m²), and a battery capacity obtained by discharging from 4.2 V to 2.5 V at a constant current of 0.05C from a state of being charged to 4.2 V at a constant current of 1C and then charged at a constant voltage of 4.2 V until a current value reaches 0.02C in a temperature environment of 25°C is defined as B (Ah), B/A > 40 Ah/m² is satisfied.

### Configuration 7:

The secondary battery according to any one of configurations 1 to 6, in which the positive electrode mixture layer contains at least one of a hydrogenated nitrile-butadiene copolymer (HNBR) and a cellulose derivative.

### Configuration 8:

The secondary battery according to any one of configurations 1 to 7, in which the multi-walled carbon nanotube includes a multi-walled carbon nanotube having a BET specific surface area greater than or equal to 200 m²/g, and the single-walled carbon nanotube includes a single-walled carbon nanotube having a BET specific surface area greater than or equal to 300 m²/g.

### Configuration 9:

The secondary battery according to any one of configurations 1 to 8, in which the single-walled carbon nanotube and the multi-walled carbon nanotube substantially contain no metal catalyst.

### Configuration 10:

The secondary battery according to any one of configurations 1 to 9, in which a content of the Si-based material is greater than or equal to 5 mass% with respect to the total mass of the negative electrode active material.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: INSULATOR
- 26: Upper vent member
- 27: Cap
- 28: Gasket

## Claims

1. A non-aqueous electrolyte secondary battery comprising a positive electrode, a negative electrode, and a non-aqueous electrolyte, wherein
the negative electrode has a negative electrode mixture layer containing a negative electrode active material including a Si-based material,
the positive electrode has a positive electrode mixture layer containing a positive electrode active material and a conductive agent,
the positive electrode active material includes a positive electrode active material A of polycrystalline particles and a positive electrode active material B of single-crystalline particles, an average particle diameter (D_{B}) of the positive electrode active material B is smaller than an average particle diameter (D_{A}) of the positive electrode active material A, and
the conductive agent contains a single-walled carbon nanotube and a multi-walled carbon nanotube.

2. The non-aqueous electrolyte secondary battery according to claim 1, wherein the positive electrode mixture layer has a porosity greater than or equal to 22%.

3. The non-aqueous electrolyte secondary battery according to claim 1 or 2, wherein a ratio (D_{A}/D_{B}) of an average particle diameter (D_{A}) of the positive electrode active material A to an average particle diameter (D_{B}) of the positive electrode active material B is greater than or equal to 2 and less than or equal to 6.

4. The non-aqueous electrolyte secondary battery according to claim 1 or 2, wherein a ratio ((M_{B}/(M_{A}+M_{B}))×100) of a mass (M_{B}) of the positive electrode active material B to a total mass (M_{A}+M_{B}) of the positive electrode active material A and the positive electrode active material B is greater than or equal to 10 mass% and less than or equal to 40 mass%.

5. The non-aqueous electrolyte secondary battery according to claim 1 or 2, wherein
a content of the multi-walled carbon nanotube is greater than or equal to 0.01 parts by mass and less than or equal to 0.5 parts by mass with respect to 100 parts by mass of the positive electrode active material, and
a content of the single-walled carbon nanotube is greater than or equal to 0.0001 parts by mass and less than or equal to 0.02 parts by mass with respect to 100 parts by mass of the positive electrode active material.

6. The non-aqueous electrolyte secondary battery according to claim 1 or 2, wherein when an area of the positive electrode mixture layer is defined as A (m²), and a battery capacity obtained by discharging from 4.2 V to 2.5 V at a constant current of 0.05C from a state of being charged to 4.2 V at a constant current of 1C and then charged at a constant voltage of 4.2 V until a current value reaches 0.02C in a temperature environment of 25°C is defined as B (Ah), B/A > 40 Ah/m² is satisfied.

7. The non-aqueous electrolyte secondary battery according to claim 1 or 2, wherein the positive electrode mixture layer contains at least one of a hydrogenated nitrile-butadiene copolymer (HNBR) and a cellulose derivative.

8. The non-aqueous electrolyte secondary battery according to claim 1 or 2, wherein the multi-walled carbon nanotube includes a multi-walled carbon nanotube having a BET specific surface area greater than or equal to 200 m²/g, and the single-walled carbon nanotube includes a single-walled carbon nanotube having a BET specific surface area greater than or equal to 300 m²/g.

9. The non-aqueous electrolyte secondary battery according to claim 1 or 2, wherein the single-walled carbon nanotube and the multi-walled carbon nanotube substantially contain no metal catalyst.

10. The non-aqueous electrolyte secondary battery according to claim 1 or 2, wherein a content of the Si-based material is greater than or equal to 5 mass% with respect to the total mass of the negative electrode active material.
